# FASCICULE DE BREVET EUROPEEN

(11) **EP 0 493 203 B1**
(45) Date de publication et mention de la délivrance du brevet: **08.03.1995**
(21) Numéro de dépôt: 91403448.3
(22) Date de dépôt: 19.12.1991
(51) Int. Cl.: G01S 7/48, C03B 29/08

(54) **Dispositif de détection sans contact de feuilles de verre en mouvement**
Vorrichtung zur berührungslosen Detektion von sich bewegenden Glasscheiben
Device for contactless detection of moving sheets of glass

(30) Priorité: 21.12.1990 FR 9016094
(43) Date de publication de la demande: 01.07.1992
(73) Titulaire: SAINT GOBAIN VITRAGE INTERNATIONAL, 92400 Courbevoie (FR)
(72) Inventeur: Mathivat, Denis, F-60150 Thourotte (FR); Sabater, Jacques, F-91190 Gif sur Yvette (FR); Weber, Frédéric, F-60200 Compiegne (FR)
(74) Mandataire: Muller, René

(56) Documents cités:
- EP-A- 0 267 850
- FR-A- 2 567 651
- FR-A- 2 642 417

## Description

La présente invention a pour objet un dispositif de détection sans contact de feuilles de verre en mouvement, à l'aide d'un barrage photoélectrique à réflexion, dans les installations de l'industrie verrière, et notamment dans les installations de fabrication de vitrages bombés et/ou trempés, qui soit opérationnel même dans les zones chaudes et/ou à atmosphère perturbée.

En effet, dans les installations verrières, il est nécessaire de pouvoir repérer le passage de chaque feuille de verre en des points donnés. Ce repérage dans l'espace et dans le temps permet de commander le déclenchement d'une (ou des) opération(s) ultérieure(s) de traitement de la feuille de verre, ou d'une opération de rectification du positionnement de celle-ci.

Or il se trouve que le marché demande des formes de vitrage de plus en plus complexes, ce qui implique des opérations de traitement des feuilles de verre de plus en plus perfectionnées. La détection devient alors une étape capitale pour assurer la bonne synchronisation de ces opérations. Il faut donc mettre au point des détecteurs toujours plus fiables, rapides, précis, quelque soit leur emplacement dans l'installation, comme par exemple le four de réchauffage, ou toute autre zone d'une installation automatique de bombage et/ou trempe de feuilles de verre, notamment pour l'obtention de vitrages d'automobiles.

Dans ce cas, les feuilles à détecter ont une température, au cours de leur déplacement dans le four jusqu'à la cellule de bombage, qui augmente jusqu'à dépasser leur température de ramollissement, le bombage s'effectuant entre 500 et 700°C.

On est ainsi amené à placer un détecteur de plus en plus loin dans la ligne de fabrication, dans des zones à plus ou moins haute température, et de surcroît ayant tendance à être perturbées par de légers brassages d'air dus aux ouvertures répétées des portes desdites zones au nombre desquelles on compte par exemple le four de réchauffage, ou la cellule de bombage ou même de trempe.

Ces ouvertures sont pourtant nécessaires pour faire circuler les outillages de bombage et/ou de trempe d'une zone à l'autre.

Cette détection de plus en plus "tardive" permet de réduire au maximum la distance entre l'endroit où l'on détecte la feuille et l'endroit où est déclenchée l'opération activée par la détection sur ladite feuille. Ainsi, on limite les incertitudes dans la détection, et par conséquent dans les opérations ultérieures qu'elle déclenche, incertitudes résultant des événements fortuits qui peuvent intervenir sur la feuille entre ces deux endroits.

Les premiers détecteurs proposés étaient des détecteurs optiques dont le fonctionnement était basé sur le principe de l'émission d'un faisceau lumineux dans le plan de transport de la feuille de verre, faiceau lumineux dont on repère la coupure au passage de la-dite feuille. Ainsi était évité tout contact entre détecteur et feuille pouvant entraîner le marquage de celle-ci quand elle a dépassé son point de ramollissement.

Mais ces faisceaux sont fortement perturbés quand ils traversent des couches d'air ayant de légères différences de température. Ceci est particulièrement vrai quand la distance à parcourir par les faisceaux lumineux est grande. Cela conduit à des déviations de trajectoire des faisceaux qui sont plus ou moins diffractés, provoquant une détection complètement faussée.

Pour remédier à ce problème, d'autres détecteurs ont alors été utilisés, comme les détecteurs mécaniques, dont un exemple, constitué d'un doigt escamotable solidaire d'un rouleau transporteur, est décrit dans le brevet EP-B-0217708. Ceux-ci présentent l'avantage d'être totalement insensibles à la température du milieu extérieur, et de pouvoir être déplacés sans grand problème sur toute la largeur du plan de transport de la feuille. En effet, la position du doigt escamotable le long de son rouleau peut aisément être modifiée. Or il est important, justement, d'avoir un détecteur aisément déplaçable, de manière à choisir le point de détection en fonction de chaque type de vitrage, suivant ses dimensions et la configuration du bord que l'on souhaite détecter.

En principe, on évite le marquage de la feuille, car dès le premier choc entre la feuille en mouvement et le doigt détecteur, celui-ci bascule. Mais dans ce processus de détection, il intervient un vérin, articulé sur le bras de levier solidaire du rouleau détecteur qui, lui, peut poser des problèmes de fiabilité, notamment en réagissant avec un temps de retard. Il existe donc bien un risque de marquage éventuel de la feuille avec ce type de détecteur, pouvant compromettre la qualité optique de celle-ci si elle a déjà atteint sa température de ramollissement.

Les détecteurs pneumatiques, comme ceux décrits dans la demande de brevet EP-A-0348266, ont l'avantage de détecter une feuille sans le moindre contact avec celle-ci. Ils sont constitués soit par un émetteur et un récepteur de gaz sous pression disposés de part et d'autre du plan de transport de la feuille, le récepteur détectant l'annulation de la pression due au passage de la feuille ; soit par un émetteur et récepteur placés tous deux sous le plan de transport, le récepteur détectant, cette fois en réflexion, la différence de pression induite par le passage de la feuille. Dans les deux cas, pour garder une bonne précision et un temps de réponse raisonnable, il est nécessaire de positionner l'émetteur très près de la feuille de verre, à une distance de l'ordre de quelques millimètres. Tout écart fortuit par rapport à cette distance bien précise entraîne des erreurs dans la détection. Eviter de tels écarts n'est pourtant pas facile, par exemple dans les zones à haute température provoquant une certaine dilatation des appareillages. De plus, les épaisseurs des feuilles de verre sont variables. On s'oblige donc à régler de nouveau, à chaque nouvelle fabrication, l'emplacement dans le plan vertical de l'émetteur et du récepteur, ce qui est parfois bien malaisé.

Des travaux ont également été effectués pour améliorer les systèmes de détection optique, mais cette fois en guidant les faisceaux lumineux. La demande de brevet EP-A-0267850 préconise de guider ces faisceaux au moyen de multitudes de fibres optiques assemblées, qui sont particulièrement adaptables à toute configuration d'installation.

Mais l'utilisation de telles fibres en verre est toutefois problématique dans une ambiance trop chaude, car celles-ci, abîmées par la trop forte chaleur, ont tendance à se rompre l'une après l'autre, à la longue, même si l'on tente de les refroidir en les entourant d'une gaine où circule un fluide de refroidissement. Et de toute façon, la tête de sortie de ces fibres reste, même avec cette gaine protectrice, relativement vulnérable à la très forte chaleur.

Une telle détérioration progressive des fibres sous le coup de très hautes températures entraîne une diminution de l'intensité des faisceaux lumineux, jusqu'à un seuil où la détection perd toute fiabilité.

La présente invention a donc pour but un dispositif de détection remédiant à tous ces inconvénients, en particulier en offrant une détection précise, rapide de la présence d'une feuille de verre en mouvement, et qui ne soit pas perturbée dans des zones chaudes dont la température peut dépasser la température de ramollissement du verre, et/ou dans des zones à brassage d'air.

Le dispositif selon l'invention permet de détecter sans contact des feuilles de verre en mouvement dans des installations verrières, en utilisant un barrage photoélectrique à réflexion comportant un émetteur et un récepteur de faisceaux lumineux, lesdits faisceaux cheminant dans un canal en matériau résistant à la chaleur, dont les parois délimitent un milieu isotherme homogène, ce canal émergeant au voisinage de la feuille à détecter.

On entend par canal un guide d'onde, qui présente la particularité, selon l'invention, d'avoir une section de dimension grande, sans commune mesure avec celles des fibres optiques, section par exemple de l'ordre de quelques centimètres carrés.

En choisissant une détection optique, on supprime tout risque de marquage. De plus, en choisissant de faire ainsi cheminer dans un canal les faisceaux lumineux, on supprime aussi les risques de diffraction et/ou déviation qu'encourent des faisceaux lumineux libres dans des zones perturbées, comme on l'a déjà explicité. De plus, le choix d'un canal en matériau résistant à la chaleur va permettre de l'utiliser en zones à haute température qui endommage les guides d'onde tels que les fibres optiques.

Ledit canal est constitué de préférence par un tube métallique.

Avantageusement, on peut choisir d'obtenir une trajectoire du faisceau émis sortant du canal qui soit sensiblement perpendiculaire au plan de transport de la feuille à détecter. En effet, quand on veut détecter un bord d'une feuille en mouvement, la détection sera plus précise si le faisceau est réfléchi pratiquement perpendiculairement audit bord.

Différentes variantes du dispositif peuvent être proposées. Si par exemple, il s'agit d'une détection alors que le plan de transport des feuilles est vertical, le faisceau lumineux peut entrer par une section du tube et ressortir par l'autre. Mais si le plan de transport est par exemple horizontal et qu'on ne peut aisément disposer le tube de manière à ce que le faisceau sortant du tube par une section puisse traverser ce plan de transport, il faut envisager d'aménager le tube, en le munissant de pièces optiques résistant à haute température, ce qui va permettre de faire cheminer au mieux les faisceaux lumineux, et surtout de les focaliser dans la zone de passage des feuilles de verre.

Lesdites pièces optiques peuvent être de plus traitées anti-reflet.

Ainsi, on peut percer dans la paroi du tube une sortie latérale et disposer un prisme dans le tube, résistant à la chaleur et infléchissant la trajectoire du faisceau lumineux émis vers la sortie latérale. On peut donc adapter le dispositif selon l'invention à toute configuration d'installation : en effet, quelque soit l'inclinaison de l'axe longitudinal du tube par rapport au plan de transport de la feuille, on positionne le prisme de manière à avoir la trajectoire de sortie souhaitée. Il est à noter que l'on peut positionner le prisme de manière à obtenir une meilleure sélectivité des faisceaux lumineux atteignant le récepteur.

En effet, il est souhaitable d'incliner le prisme de manière à ce que la normale à la première face rencontrée par le faisceau lumineux émis du prisme ne soit pas tout à fait parallèle au dit faisceau, l'angle d'inclinaison étant en général inférieur à 10°, en fonction des caractéristiques des pièces optiques. Ainsi, on évite que le récepteur ne reçoive des faisceaux lumineux parasites issus de la réflexion du faisceau lumineux émis sur les faces du prisme.

La précision de la détection est d'autant meilleure que le faisceau lumineux est focalisé le plus précisément possible sur la feuille de verre, créant une "tache" lumineuse d'autant plus localisée et plus rapide à analyser qu'elle est petite. Pour cette focalisation, on peut prévoir en regard de la sortie une première lentille : celle-ci permet une focalisation optimale du faisceau émis sortant du tube sur la feuille à détecter.

On peut également, par exemple, disposer une seconde lentille dans la section d'entrée du faisceau émis, pour canaliser la trajectoire du faisceau dans sa partie parallèle aux parois du tube.

On précise qu'il est avantageux d'avoir une source lumineuse de petite dimension, quasi-ponctuelle, de manière à avoir à focaliser un faisceau lumineux le plus petit possible. Ainsi la précision sera optimale. Pour cela, on peut utiliser comme émetteur une diode émissive.

Les faisceaux lumineux émis et reçus sont avantageusement centrés sur une longueur d'onde bien sélectionnée, qui peut être choisie dans tout le domaine pouvant aller de l'ultra-violet à l'infra-rouge. On peut choisir, par exemple, une longueur d'onde du domaine infra-rouge, dans la mesure où on connait bien la manière de traiter des signaux dans ce domaine et où existent dans ce même domaine infra-rouge des émetteurs puissants. De surcroît, l'émetteur émet le faisceau lumineux en modulation d'amplitude. Le récepteur est capable de repérer en retour le rayon lumineux réfléchi grâce à sa longueur d'onde particulière, et de le filtrer en laissant de côté tous les autres rayonnements infra-rouge parasites, qui foisonnent dans des enceintes chauffées comme un four de réchauffage. La modulation permet d'éliminer la composante continue du rayonnement parasite de même longueur d'onde.

Avantageusement, on peut disposer près de la sortie du canal une pièce de protection tel qu'un cône dont la plus large section est appliquée sur ledit orifice. Il permet de prémunir les pièces optiques contre d'éventuelles chutes de poussières, de calcin.

On peut par exemple placer le canal dans un plan parallèle au plan de transport des feuilles de verre à détecter : ceci peut se révéler pratique, dans un four de réchauffage d'une installation de bombage/trempe, où le plan parallèle aux rouleaux transporteurs et particulièrement en dessous de ceux-ci est une zone peu encombrée et accessible, il suffit de régler le prisme en conséquence.

Le canal débouche par exemple dans ce cas à une distance comprise entre 50 et 80 mm du plan de transport de la feuille de verre à détecter. Se dégage ici un avantage très significatif : on peut placer ce canal à une distance assez grande de la feuille, sans affecter la précision de la détection. En outre, étant relativement éloigné des rouleaux, il n'y a pas de risque de retenir les éventuels morceaux de verre cassé, bloqués entre rouleau et dispositif.

On dispose ainsi le canal sous les rouleaux, et non entre ceux-ci, celui-ci est alors beaucoup plus accessible. Cet emplacement du canal permet de le déplacer très facilement à l'endroit où l'on souhaite effectuer la détection, tout au long du chemin des rouleaux transporteurs. Comme indiqué plus haut, le maximum de précision est obtenu lorsque le faisceau est parfaitement focalisé sur le vitrage, toutefois le dispositif de détection selon l'invention reste parfaitement efficace même si ladite distance subit des écarts, dans la gamme indiquée plus haut, de 10 à 15 mm. Il n'y a donc pas besoin de faire des réglages complexes et répétitifs pour déterminer la bonne position en hauteur de détecteur. De plus, le fait que le canal se trouve nettement en dessous des rouleaux évite une accumulation de calcin peu souhaitable entre les rouleaux et le canal. L'éventuel calcin peut s'écouler ici sans problème de part et d'autre du canal.

On peut choisir de transmettre les faisceaux lumineux de l'émetteur et du récepteur jusqu'à l'entrée du canal et/ou à l'intérieur de celui-ci, tout au moins sur une certaine longueur de ce canal par des fibres optiques. Celles-ci restent en effet un guide d'onde particulièrement pratique d'utilisation et très adaptable, dans la mesure où elles ne sont pas exposées à de trop fortes chaleurs.

Les détails et caractéristiques avantageuses de l'invention sont maintenant décrits, en référence aux dessins annexés qui représentent :
- **Figure 1** : un schéma d'un mode de réalisation du dispositif de détection selon l'invention.
- **Figure 2** : un schéma du canal appartenant audit dispositif, en place sous les rouleaux transporteurs d'un four de réchauffage d'une installation de bombage et/ou trempe de feuilles de verre.

Dans les deux figures, par souci de clarté, les proportions relatives des différents éléments schématisés n'ont pas été respectées.

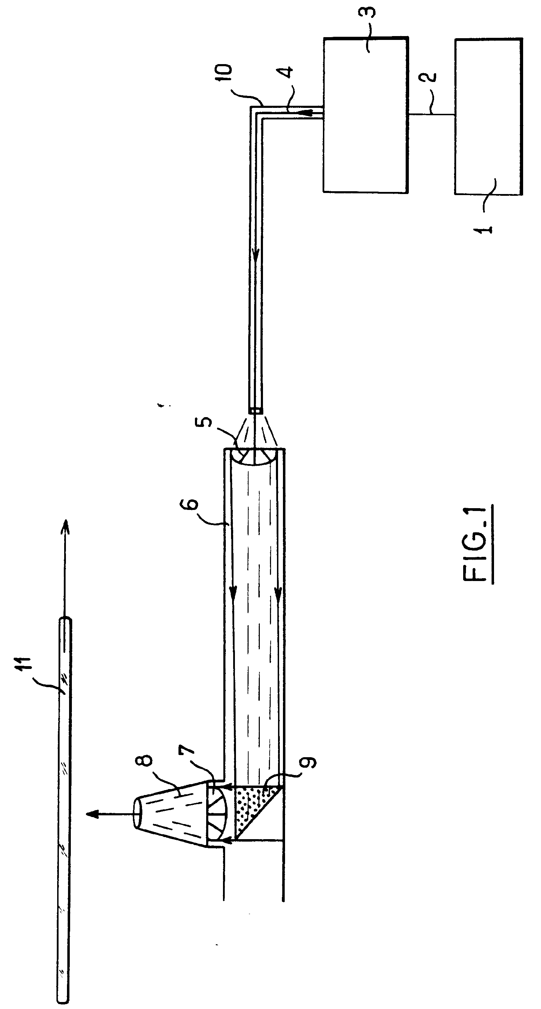

A la figure 1, on a donc représenté le dispositif de détection selon un exemple non limitatif de réalisation de l'invention. De manière connue, on dispose à l'abri de toute source de chaleur un émetteur/récepteur 3 de faisceaux lumineux. L'émetteur peut être une diode émissive, source lumineuse quasi-ponctuelle. Les faisceaux émis 4 sont centrés sur une fréquence choisie, et modulés en amplitude. Dans cet exemple, c'est une fréquence dans le domaine infra-rouge qui a été retenue.

De manière connue, le récepteur traduit les faisceaux lumineux reçus en impulsions électriques, traitées et utilisées ultérieurement par une unité de traitement 1 raccordée électriquement 2 au récepteur.

Le faisceau émis suit une trajectoire de l'émetteur/récepteur 3 jusqu'au voisinage d'une feuille 11 à détecter, en passant par un canal 6. Il entre par une section du canal, et peut sortir soit par l'autre section, soit par une sortie latérale. Dans cet exemple, on a choisi une sortie latérale. Le faisceau réfléchi suit la même trajectoire en sens inverse.

Toujours selon cet exemple, la trajectoire traverse en partie une zone abritée non chaude qui part d'un émetteur/récepteur 3, et en partie une zone perturbée et/ou très chaude, comme un four par exemple, où se trouve la feuille 11 dont on veut détecter la présence et/ou la position.

Hors zone chaude et/ou perturbée, les faisceaux peuvent être guidés à partir de l'émetteur/récepteur 3 par tout moyen connu, comme par exemple ici par des fibres optiques 10, qui constituent un guide d'onde particulièrement efficace quand elles ne sont pas exposées à de hautes températures. Ici, très avantageusement, la face de sortie des fibres optiques fera office de source lumineuse quasi-ponctuelle. Il est à noter que celles-ci peuvent être d'une longueur variable selon la configuration de l'installation, et suivant les emplacements de l'émetteur/récepteur 3 et de l'unité de traitement 1. On peut même ne pas utiliser un tel guide 10, mais cela conduit alors à rapprocher l'émetteur/récepteur 3 de la zone chaude, ce qui peut poser des problèmes de protection de celui-ci vis à vis de la chaleur rayonnée et/ou des problèmes d'encombrement dans une zone de manipulation. Ou alors, il faut organiser pour les faisceaux lumineux libres des trajectoires bien précises et immuables, ce qui n'est peut-être pas très pratique si l'on veut modifier ultérieurement les configurations d'installation.

Dès que les faisceaux pénètrent en zone chaude et/ou perturbée, le dispositif conçu suivant l'invention permet d'assurer à ceux-ci une trajectoire en milieu isotherme et homogène, à l'abri des mouvements d'air chaud jusqu'à proximité de la feuille. Ce résultat est obtenu au moyen du canal 6 dont les parois délimitent un tel milieu. Néanmoins, il est clair qu'un tel canal peut a fortiori guider les faisceaux lors de leur trajectoire en zone abritée et/ou non chaude.

Selon le mode de réalisation représenté, le canal 6 est constitué par un tube métallique à section carrée 5 cm x 5 cm, de longueur variable suivant la configuration de l'installation, et suivant le point de passage où l'on souhaite détecter la feuille 11.

Cette longueur peut aller jusqu'à correspondre à la largeur de l'installation, il faut alors s'assurer que le tube n'ait pas tendance à fléchir quand il est soumis à haute température s'il est relativement long.

Ce canal est équipé essentiellement de trois pièces optiques, de préférence en silice, matériau résistant à une température supérieure à 1000°C : tout d'abord une première lentille 5 disposée à l'extrémité du tube où rentre le flux lumineux émis est destinée à bien canaliser celui-ci dans le-dit tube. Un prisme 9 est positionné dans le tube, déterminant la fin de la trajectoire parallèle au plan du tube du faisceau émis. Le faisceau, en frappant le prisme, est dévié et repart dans une direction choisie ici pratiquement perpendiculaire au tube dans l'exemple de réalisation schématisé. La troisième pièce est une lentille 7 pour refocaliser le faisceau dévié par le prisme. Elle est disposée sur la sortie latérale dudit faisceau aménagé dans la paroi du tube. Pour donner des indications chiffrées relatives à la figure 1, on peut par exemple utiliser des lentilles entrée et sortie de 75 mm de focale, de 40 mm de diamètre et du type plan convexe. Le canal peut avoir une longueur de 1,80 m, et le diamètre des fibres optiques peut être de 1 à 2 mm. Il est avantageux alors, en considérant ces données, d'incliner le prisme selon un axe donné d'une valeur d'environ ½ degré : c'est suffisant pour éviter que le récepteur ne capte les rayons parasites réfléchis sur les faces du prisme.

Dans cet exemple, on a ajouté une pièce destinée à protéger les pièces optiques des retombées de calcin. Il s'agit d'un cône 8, métallique de préférence, dont le plus grand diamètre est ajusté sur la sortie du faisceau émis.

On peut de plus munir le canal 6 d'une arrivée de gaz telle qu'un tuyau très fin, non représenté à la figure 1, qui entre dans le canal par exemple par la section d'entrée du faisceau émis, et qui débouche en se dédoublant, d'une part à proximité du prisme 9, d'autre part à proximité de la lentille 7 toujours à l'intérieur du canal. Ce tuyau, alimenté en gaz, permet alors, en soufflant très doucement sur chacune de ces pièces optiques, de les débarrasser d'éventuelles traces de poussière et/ou calamine.

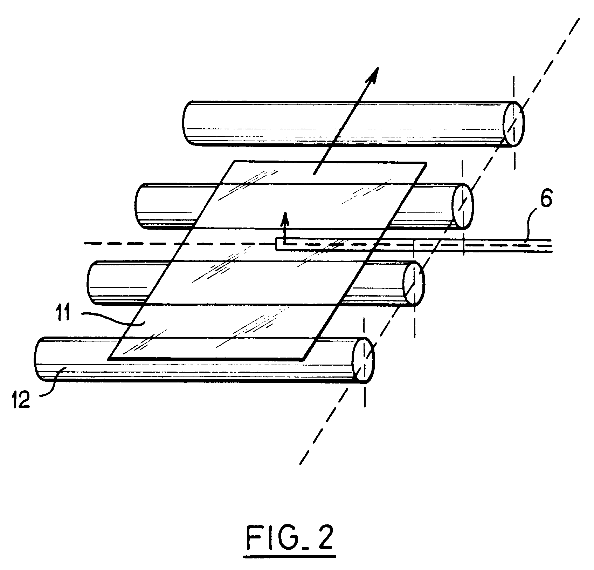

Selon la figure 2, est indiqué l'emplacement possible du canal dans une section d'un four de réchauffage d'une installation de bombage et/ou trempe. Il est clair que cette disposition n'est donnée qu'à titre d'exemple, et que l'emplacement du canal selon l'invention peut être envisagé à tout endroit de détection habituel de feuilles de verre d'une installation verrière.

Ce schéma n'indique, pour simplifier, que les rouleaux transporteurs du four. Le canal 6 est avantageusement sous ces rouleaux, parallèle à l'un d'entre eux, une de ses extrêmités se trouvant à l'extérieur du four. Il est ainsi accessible aux réglages. Le faisceau émis, sortant perpendiculairement au tube, frappe perpendiculairement aussi la feuille 11 en mouvement.

Le trajet libre du faisceau émis sortant dudit canal avant de rencontrer la feuille de verre est ici de 65 mm, mais peut varier entre 50 et 80 mm. Même s'il intervient des écarts de 10 à 15 mm dans cette gamme de longueur, ceux-ci ne provoquent pas de problèmes significatifs dans la détection tels qu'une imprécision ou une augmentation de temps de réponse.

On constate donc qu'un tel canal est très adaptable : d'après le schéma, on peut voir qu'on peut aisément le déplacer sur toute la largeur des rouleaux, ainsi que le déplacer à proximité de tel ou tel rouleau sur toute la longueur de l'ensemble des rouleaux.

La détection par un tel dispositif est extrêmement rapide et précise, puisque l'on obtient un maximum dans la réponse en environ 15/1000èmes de seconde.

## Revendications

1. Dispositif de détection sans contact de feuilles de verre en mouvement dans des installations verrières, utilisant un barrage photoélectrique à réflexion comportant un émetteur et un récepteur (3) de faisceaux lumineux **caractérisé en ce que** les faisceaux lumineux (4) cheminent dans un canal (6) en matériau résistant à la chaleur dont les parois délimitent un milieu gazeux isotherme homogène, ledit canal émergeant au voisinage du plan de transport de la feuille (11) à détecter.

2. Dispositif selon la revendication 1 **caractérisé en ce que** le canal (6) est un tube métallique.

3. Dispositif selon l'une des revendications précédentes **caractérisé en ce que** le canal (6) est muni de pièces optiques pour focaliser dans la zone de passage des feuilles de verre le faisceau lumineux émis.

4. Dispositif selon la revendication 3 **caractérisé en ce que** une lentille (7) résistant à la chaleur est disposée dans la sortie du canal (6).

5. Dispositif selon la revendication 3 ou 4, caractérisé en ce que le canal comporte des moyens déflecteurs réfléchissants.

6. Dispositif selon la revendication 5 **caractérisé en ce que** la sortie du canal (6) est latérale et **en ce que** le canal comporte un prisme (9) résistant à la chaleur infléchissant la trajectoire du faisceau lumineux vers ladite sortie latérale.

7. Dispositif selon l'une des revendications précédentes **caractérisé en ce que** le canal (6) est placé dans un plan parallèle au plan de transport de la feuille de verre (11) à détecter.

8. Dispositif selon l'une des revendications précédentes **caractérisé en ce que** le canal (6) est placé sous des moyens de transport tels que des rouleaux convoyeurs de la feuille de verre (11) à détecter.

9. Dispositif selon l'une des revendications 3 à 8 **caractérisé en ce que** le canal (6) est muni d'une lentille (5) résistant à la chaleur dans sa section où entre le faisceau lumineux émis.

10. Dispositif selon l'une des revendications précédentes **caractérisé en ce que** la sortie du canal (6) est surmontée d'une pièce (8) de protection anti-calcin, tel qu'un cône métallique dont la plus large section est appliquée sur ladite sortie.

11. Dispositif selon l'une des revendications 3 à 10 **caractérisé en ce que** le canal (6) est muni d'arrivées de gaz à proximité des pièces optiques dudit canal.

12. Dispositif selon l'une des revendications précédentes **caractérisé en ce que** l'émetteur est une source lumineuse quasi-ponctuelle telle qu'une diode émissive.

13. Dispositif selon l'une des revendications précédentes **caractérisé en ce que** le faisceau lumineux émis est centré sur une longueur d'onde particulière.

14. Dispositif selon la revendication 13 **caractérisé en ce que** la longueur d'onde choisie appartient au domaine de l'infra-rouge.

15. Dispositif selon l'une des revendications précédentes **caractérisé en ce que** le faisceau lumineux émis est modulé en amplitude.

16. Dispositif selon l'une des revendications précédentes **caractérisé en ce que** le canal (6) débouche à une distance comprise entre 50 et 80 mm du plan de transport de la feuille (11) à détecter.

17. Dispositif selon l'une des revendications précédentes **caractérisé en ce que** les surfaces des pièces optiques (5, 7, 9) sont traitées anti-reflet.

18. Dispositif selon l'une des revendications 6 à 17, **caractérisé en ce que** le prisme (9) dans le canal (6) est disposé de manière à ce que l'angle entre le faisceau lumineux émis (4) et la normale à la première face dudit prisme rencontrée par ledit faisceau soit inférieur à 10 degrés.

19. Dispositif selon l'une des revendications précédentes **caractérisé en ce que** une partie au moins du parcours des faisceaux lumineux (4) dans le canal (6) est effectuée dans au moins une fibre optique.

20. Dispositif selon l'une des revendications précédentes **caractérisé en ce que** les faisceaux lumineux (4) sont amenés jusqu'à l'entrée du canal (6) par au moins une fibre optique (10).

21. Dispositif de détection selon l'une des revendications précédentes utilisé pour la détection de feuille de verre en ambiance chaude et/ou à brassage d'air, en particulier dans les zones de bombage et/ou trempe d'installations verrières.

## Patentansprüche

1. Vorrichtung zum berührungslosen Prüfen von in Bewegung befindlichen Glasscheiben in Glasanlagen, wobei eine mit Reflexion arbeitende Lichtschranke verwendet wird, die einen Strahler und einen Empfänger (3) für Lichtstrahlenbündel umfaßt, **dadurch gekennzeichnet**, **daß** die Lichtstrahlenbündel (4) einen Kanal (6) aus hitzebeständigem Material passieren, dessen Wände ein homogenes isothermes gasförmiges Medium einschließen, wobei dieser Kanal in der Nähe der Transportebene der zu prüfenden Scheibe mündet.

2. Vorrichtung nach Anspruch 1, **dadurch gekennzeichnet, daß** der Kanal (6) ein Metallrohr ist.

3. Vorrichtung nach Anspruch 1 oder 2, **dadurch gekenn****zeichnet, daß** der Kanal (6) mit optischen Bauteilen zum Fokussieren des ausgesendeten Lichtstrahlenbündels im Durchlaufbereich der Glasscheiben ausgerüstet ist.

4. Vorrichtung nach Anspruch 3, **dadurch gekennzeichnet**, **daß** im Ausgang des Kanals (6) eine hitzebeständige Linse (7) angebracht ist.

5. Vorrichtung nach Anspruch 3 oder 4, **dadurch gekenn****zeichnet, daß** der Kanal reflektierende Ablenkmittel enthält.

6. Vorrichtung nach Anspruch 5, **dadurch gekennzeichnet, daß** der Ausgang des Kanals (6) seitlich ist **und daß** der Kanal ein hitzebeständiges Prisma (9) enthält, das den Weg des Lichtstrahlenbündels zu diesem seitlichen Ausgang ablenkt.

7. Vorrichtung nach einem der vorhergehenden Ansprüche, **da****durch gekennzeichnet, daß** der Kanal (6) in einer Ebene angeordnet wird, die zu der Transportebene der zu prüfenden Glasscheibe (11) parallel steht.

8. Vorrichtung nach einem der vorhergehenden Ansprüche, **da****durch gekennzeichnet, daß** der Kanal (6) unter solchen Transportmitteln wie Tragrollen für die zu prüfende Glasscheibe (11) angeordnet wird.

9. Vorrichtung nach einem der Ansprüche 3 bis 8, **dadurch gekennzeichnet, daß** der Kanal (6) mit einer hitzebeständigen Linse (5) in dem Querschnitt ausgerüstet ist, wo das ausgesendete Lichtstrahlenbündel eintritt.

10. Vorrichtung nach einem der vorhergehenden Ansprüche, **da****durch gekennzeichnet**, **daß** auf dem Ausgang des Kanals (6) ein Schutzteil (8) gegen Glasbruch wie ein Metallkegelstumpf befestigt ist, dessen größter Querschnitt auf diesen Ausgang paßt.

11. Vorrichtung nach einem der Ansprüche 3 bis 10, **dadurch ge****kennzeichnet, daß** der Kanal (6) in der Nähe der optischen Bauteile dieses Kanals mit Gaszuleitungen ausgerüstet ist.

12. Vorrichtung nach einem der vorhergehenden Ansprüche, **da****durch gekennzeichnet**, **daß** der Strahler eine Quasipunktlichtquelle wie eine Leuchtdiode ist.

13. Vorrichtung nach einem der vorhergehenden Ansprüche, **da****durch gekennzeichnet**, **daß** das ausgesendete Lichtstrahlenbündel auf eine bestimmte Wellenlänge zentriert ist.

14. Vorrichtung nach Anspruch 13, **dadurch gekennzeichnet**, **daß** die gewählte Wellenlänge zum Infrarotbereich gehört.

15. Vorrichtung nach einem der vorhergehenden Ansprüche, **da****durch gekennzeichnet, daß** das ausgesendete Lichtstrahlenbündel amplitudenmoduliert ist.

16. Vorrichtung nach einem der vorhergehenden Ansprüche, **da****durch gekennzeichnet**, **daß** der Kanal (6) in einem Abstand von 50 bis 80 mm von der Transportebene der zu prüfenden Glasscheibe (11) mündet.

17. Vorrichtung nach einem der vorhergehenden Ansprüche, **da****durch gekennzeichnet**, **daß** die Oberflächen der optischen Bauteile (5, 7, 9) entspiegelungsbehandelt sind.

18. Vorrichtung nach einem der Ansprüche 6 bis 17, **dadurch ge****kennzeichnet, daß** das Prisma (9) im Kanal (6) derart angeordnet ist, daß der Winkel zwischen dem ausgesendeten Lichtstrahlenbündel (4) und der Normalen auf der ersten Seite dieses Prismas, auf welche dieses Bündel trifft, kleiner als 10 Grad ist.

19. Vorrichtung nach einem der vorhergehenden Ansprüche, **da****durch gekennzeichnet, daß** wenigstens ein Teil des Weges der Lichtstrahlenbündel (4) im Kanal (6) in wenigstens einem Lichtwellenleiter zurückgelegt wird.

20. Vorrichtung nach einem der vorhergehenden Ansprüche, **da****durch gekennzeichnet, daß** die Lichtstrahlenbündel (4) bis zum Eintritt in den Kanal (6) durch wenigstens einen Lichtwellenleiter (10) herangeführt werden.

21. Prüfvorrichtung nach einem der vorhergehenden Ansprüche, die zum Prüfen von Glasscheiben in heißer Umgebung und/oder bei Lufteinblasen, insbesondere in Biege- und/oder Vorspannzonen von Glasanlagen, verwenbar ist.

## Claims

1. Apparatus for the contact-free detection of moving glass sheets in glass-making installations, using a photoelectric reflection barrier incorporating a light beam emitter and receiver (3), characterized in that the light beams (4) travel in a heat-resistant material channel (6), whose walls define an isothermal, homogeneous, gaseous medium, said channel emerging in the vicinity of the conveying plane of the sheet (11) to be detected.

2. Apparatus according to claim 1, characterized in that the channel (6) is a metal tube.

3. Apparatus according to any one of the preceding claims, characterized in that the channel (6) is provided with optical members for focussing the emitted light beam into the glass sheet passage zone.

4. Apparatus according to claim 3, characterized in that a heat-resistant lens (7) is placed in the outlet of the channel (6).

5. Apparatus according to claims 3 or 4, characterized in that the channel has reflecting deflecting means.

6. Apparatus according to claim 5, characterized in that the outlet of the channel (6) is lateral and in that the channel has a heat-resistant prism (9) inwardly bending the path of the light beam towards said lateral outlet.

7. Apparatus according to any one of the preceding claims, characterized in that the channel (6) is placed in a plane parallel to the conveying plane of the glass sheet (11) to be detected.

8. Apparatus according to any one of the preceding claims, characterized in that the channel (6) is placed beneath conveying means, such as rollers for conveying the glass sheet (11) to be detected.

9. Apparatus according to any one of the claims 3 to 8, characterized in that the channel (6) is provided with a heat-resistant lens (5) in its section where the emitted light beam enters.

10. Apparatus according to any one of the preceding claims, characterized in that the outlet of the channel (6) is surmounted by a cullet-protection part (8), such as a metal cone, whose widest section is applied to said outlet.

11. Apparatus according to any one of the claims 3 to 10, characterized in that the channel (6) is provided with gas intakes in the vicinity of the optical members of said channel.

12. Apparatus according to any one of the preceding claims, characterized in that the emitter is a quassi-punctiform light source, such as an emissive diode.

13. Apparatus according to any one of the preceding claims, characterized in that the emitted light beam is centred on a particular wavelength.

14. Apparatus according to claim 13, characterized in that the chosen wavelength belongs to the infrared range.

15. Apparatus according to any one of the preceding claims, characterized in that the emitted light beam is amplitude modulated.

16. Apparatus according to any one of the preceding claims, characterized in that the channel (6) issues at a distance between 50 and 80 mm from the conveying plane of the sheet (11) to be detected.

17. Apparatus according to any one of the preceding claims, characterized in that the surfaces of the optical members (5, 7, 9) are given an anti-reflection treatment.

18. Apparatus according to any one of the claims 6 to 17, characterized in that the prism (9) in the channel (6) is positioned in such a way that the angle between the emitted light beam (4) and the normal to the first face of the prism encountered by the beam is below 10°.

19. Apparatus according to any one of the preceding claims, characterized in that at least a part of the path of the light beams (4) in the channel (6) takes place in at least one optical fibre.

20. Apparatus according to any one of the preceding claims, characterized in that the light beams (4) are supplied to the inlet of the channel (6) by at least one optical fibre (19).

21. Detection apparatus according to any one of the preceding claims used for the detection of a glass sheet under hot and/or air stirring conditions, particularly in the cambering and/or tempering zones of glassmaking installations.
